# EUROPEAN PATENT SPECIFICATION

(11) **EP 2 986 499 B1**
(45) Date of publication and mention of the grant of the patent: **13.03.2019**
(21) Application number: 14784605.9
(22) Date of filing: 01.04.2014
(51) Int. Cl.: B63B 27/24, F16L 37/28

(54) **FLUID TRANSPORT SYSTEM WITH AN AUTOMATICALLY RELEASABLE COUPLING AND USE THEREOF**
FLUIDTRANSPORTSYSTEM MIT EINER AUTOMATISCH LÖSBAREN VERBINDUNG UND VERWENDUNG DAVON
SYSTÈME DE TRANSPORT DE FLUIDE AVEC COUPLAGE DÉTACHABLE AUTOMATIQUEMENT ET UTILISATION ASSOCIÉE

(30) Priority: 17.04.2013 EP 13164170; 15.10.2013 DK 201370587
(43) Date of publication of application: 24.02.2016
(73) Proprietor: Ocean Team Group A/S, 6700 Esbjerg (DK)
(72) Inventor: THOMSEN, Jens Peder Høg, DK-6800 Varde (DK)
(74) Representative: Nielsen, Leif
(86) International application number: PCT/DK2014/050076
(87) International publication number: WO 2014/169918

(56) References cited:
- EP-A1- 2 374 711
- EP-A1- 2 374 711
- WO-A1-02/28765
- WO-A2-2008/007034
- CN-U- 202 746 561
- CN-U- 202 746 561
- US-A1- 2004 011 424
- US-A1- 2009 295 150

## Description

### Field of the Invention

The present invention relates to a method of changing oil of a gearbox in a nacelle of a wind turbine with a system for transport of fluid.

The invention also relates to use of such a method.

### Background of the Invention

Today oil conversion (oil change) on gearbox in an offshore wind turbine generator is often performed in the following way:
- Empty cans are lifted up from the (service-) vessel and into the nacelle of the wind turbine; often by several hoist operations.
- Cans are filled with the old oil manually, resulting in heavy work and risk of splashes.
- Cans with old oil are hoisted down to the (service-) vessel with many hoist operations.
- Cans with new oil are hoist up into nacelle with many hoist operations.
- New oil is manually filled into the gearbox.
- Empty cans are hoisted down to the vessel.

A complete hoist operation (lowering and lifting) can take from 10 to 40 minutes in an offshore wind turbine, depending of hoist / crane in the Nacelle. Every hoist operation is considered as a dangerous operation because of the risk of falling objects. A drop of a can with oil is also an environmental issue because of the risk of oil pollution. Every hoist operation also implies a higher risk because the (service-) vessel has to go near to the foundation of the offshore wind turbine generator with the risk of damages to the (service-) vessel and / or the foundation of the offshore wind turbine generator.

As there is typically a limited time frame in the order of a day, for example in the North See, with low wind speed and low waves, there is a time concern as well. The wind speed shall be below 10 m/s and the waves less than 2 meters to make a safe operation.

Thus, it is desirable to improve safety when changing oil or other fluids in an offshore wind turbine generator (vessel to offshore wind turbine generator). It is also desirable that system for offshore fluid exchange is so flexible that it can be used in many combinations, for example vessel to vessel or vessel to offshore oil and gas platforms or rigs. At the same time, there should be taken account for high safety, environmental safety, fail safety, fast operation, and minimisation of heavy lifting for personnel.

European patent application EP2374711 and International patent application WO02/28765, equivalent to US6886611, disclose a safety connection with safety valves between a ship and an on-shore installation. The onshore installation or the ship comprises one part of the safety coupling, and the other part of the safety coupling is provided at the end of a flexible tube, which is lifted by a hoist. A further type of coupling is disclosed in International patent application WO2008/007034, equivalent to US8296914. Such systems require matching between the safety mechanism on the hose and the safety mechanism to which the hose is going to be attached to. For ships that are travelling to various international harbours, this is disadvantageous, as there does not exist a global standard for safety connectors where the connector on a hose automatically fits a connector on-shore. For example, EP2374711, US6886611, and US8296914 disclose three very different systems that are not mutually compatible, such that one of these three systems when used on a ship would not fit to one of the other two systems if these were used in a harbour.

The safety valves in EP2374711 are operated by hydraulics with kinematics which carry out a mechanical blocking by means of a buttress system which makes it possible to accept any loss of hydraulic energy without this disturbing the connection and, therefore, the fluid transfer through the valves. However, in case of such hydraulics loss, an emergency release is prevented such that pull from the ship on the safety valve system may cause damage. Therefore, this system is not optimized as an emergency release system in case of hydraulics failure. In US6886611 an emergency disconnection device is disclosed which is an hydraulically operated double valve with emergency release system; also in this case, for the emergency release, functioning hydraulics are needed.

It would be desirable, if an emergency release is not dependent on functioning hydraulics.

Improvements in the exchange procedure for onshore wind turbine generators are found in Chinese utility model CN202746561U, disclosing a truck with a wind turbine gearbox oil change device, where oil tanks on the truck are connected with the gearbox. Another wind turbine gearbox oil change system is disclosed in Chinese patent application CN102817999A.

For offshore wind turbine generators, gearbox oil exchange is also performed with long hoses connected to the gearbox in the nacelles. However, this is a difficult and dangerous operation, especially in rough sea, why safety aspects have high attention. One of the aspects is speed of the operation, as quick operations reduce the risk for weather changes that may impose a decrease in safety. For this reason, there is a continuous need for improvements.

### Objective of the Invention

The objective of the present invention is to provide a highly safe method and/or system capable of fluid transmission to and/or from an onshore installation or, especially, an offshore installation. Special focus has liquid transport from a vessel to an offshore installation, for example in connection with a wind turbine generator, or from vessel to vessel. The method or system shall be environmental safe. It is also an objective that the method or system is fast for use.

### Description of the Invention

This purpose is achieved with a method of changing oil of a gearbox in a nacelle of a wind turbine with a system for transport of fluid according to claim 1.

The system comprises an umbilical connected with its one end to a manifold. The manifold has means for being connected to a hoist for lifting the manifold and thereby lifting the umbilical at its one end into a hanging configuration of the umbilical. The term hoist is used in a broad sense as an apparatus for lifting.

The term "umbilical" is used in the field as describing the connecting element, including the hose, for transport of fluid, the connection being made
- between a fixed point and a floating point, for example between an offshore wind turbine generator and a ship or between a rig and a ship,
- between two floating points, for example between two ships;
- between two fixed points, for example an onshore wind turbine and a truck on ground.

In case that the hose is the only element connecting the points for transport of fluid, especially liquid between the points, the term umbilical has to be understood as the hose itself. If the connection between the points also includes other components, especially lifting lines along with the hose and/or sleeves surrounding the hose, as will be explained in the following, the term umbilical includes these components as well. The umbilical may further comprise gas hoses and electrical wires. The term umbilical is used in metaphorical similarity to the medical expression for the fluid transporting tubular element between a mother and a child before birth.

Examples include lifting the manifold with the end of the umbilical, including the hose, from an offshore vessel, such as a ship, to another offshore vessel for transport of fluid between the vessels or lifting the manifold to an onshore installation or offshore installation, such as a wind turbine generator for changing oil its gearbox in its nacelle.

The manifold comprises an upper manifold part and a lower manifold part mutually connected by an automatically releasable coupling; the coupling is configured for causing controlled and automated release of the lower manifold part from the upper manifold part if a force for separating the two manifold exceeds a first controlled, predetermined limit. For example, the first controlled, predetermined limit is between 3 kN and 10 kN. Examples of such automatically releasable couplings are known under the term "break away couplings", in which shear bolts or other break-away elements are arranged for breaking at a predetermined force level.

Advantageously, the automatically releasable coupling is an automatically releasable shut off coupling, which, in case of separation of the lower manifold part from the upper manifold part, also automatically shuts off flow through the end of the hose. For this purpose, the coupling may be fitted with check valves on both side of the coupling, so that the leak of fluid is reduced to a minimum for protection of the environment.

The release coupling acts passively in the sense that only pull of a sufficient strength is necessary to activate the automatic release coupling for separating the upper and lower part of the manifold and, thereby, the umbilical from any connection. This fully automatic release does not imply necessity of any further surveillance or control to activate the release and neither the necessity of activation or deactivation of hydraulics or pneumatics.

The umbilical is fastened with its first end to the lower manifold part for being lifted with the manifold when the lower manifold part is connected to the upper manifold part and for being released from the upper manifold part together with the lower manifold part by the automatically releasable coupling in case of the first controlled, predetermined limit is exceeded. For example, the latter can occur when the distance between vessels or between a ship and an offshore installation gets larger than the length of the umbilical, and the umbilical pulls on the lower manifold part. Such distance increase happens typically unintentionally in rough weather or in emergency situations where an increased distance is essential despite the risk for mechanical damage.

It is pointed out that the entire manifold with the one end of the umbilical is lifted by a hoist for connection to a ship or an installation. This implies that the entire safety coupling inclusive safety valves is provided in the manifold and lifted together with the one end of the umbilical.

A simple connection tube can be provided for fluid flow connection between the manifold and the installation or ship, to which the umbilical is attached. The simple connection tube can be of the kind which is generally used for such tube connections, whereas the manifold only implies the safety valve mechanism. This is in contrast to the above mentioned documents, EP2374711, WO02/28765, US6886611, WO2008/007034, and US8296914, where only one half of the safety mechanism is lifted, whereas the other stays at the onshore installation or on the ship.

In a specific embodiment, such connection tube is attached to the upper manifold part and has a remote end for connection to a tank for fluid-flow communication between the connection tube and the tank. The remote end is remote to the upper manifold part. The connection tube has a second end opposite to the remote end, the second end being arranged for fluid-flow communication with the hose through the upper and lower manifold parts for flow of fluid from the hose, through the manifold and through the connection tube and through the remote end, for example for flow into the tank, or for flow of fluid in the opposite way. The connection tube is configured for being lifted by the hoist together with the manifold and with the first end of the umbilical prior to connection of the remote end to the tank for fluid-flow communication.

Advantageously, the upper and lower manifold parts are interconnected by a speed damping arrangement and a brake line configured to be moved, for example unwound, through the speed damping arrangement for damping the speed of the brake line during separation of the lower manifold part from the upper manifold part for thereby also damping the speed of such separation. For example, the speed damping arrangement is configured for limiting the speed of the brake line (7) to a predetermined speed value, such as predetermined maximum speed value. This arrangement prevents free fall, which is advantageous, because there is a great danger for material damage and personal injury when the lower manifold part is released from the upper manifold part and would get into a free fall from substantial height, for example 50 or 100 meter. For example, the speed damping arrangement is attached to the upper manifold part and configured for being lifted by the hoist together with the manifold prior to connection to the tank. The brake line stays connected to the lower manifold part during fall and reduces the fall speed of the lower manifold part due to resistance provided by the speed damping arrangement. This way, not only the release can be controlled but also the fall. The reduced speed gives the personnel more time to escape from the area, where the lower manifold part would land. As an example, the brake line is controlled automatically and limited to a maximum speed of between 0.5 and 2 meter/second, for example 1 m/s, at a load of 50-250 kg, for example at 100 kg. A typical weight of the lower manifold part is 150-250 kg, and the speed would be adjusted to between 0.5 and 3 m/s, for example between 1 and 2 m/s. For example, the predetermined maximum speed is independent of the weight.

For example, the brake line is moved, for example unwound, through a brake mechanism that comprises a drum through which the brake line runs, where the drum resists fast rotation. For example, the drum has a frictional groove or wheel in which the line runs. Optionally, such resistance against fast rotation can be caused by centrifugal brakes which increase the braking force in dependence of rotational speed. Such brakes have the advantage that they work automatically and passively with high reliability. Other mechanisms for damping the speed of the brake line are possible, however. For example, the brake line passes around a grooved pully, linked to a high speed shaft.

Once, the brake line has moved through the speed damping mechanism, the brake line is entirely released from the upper manifold part, such that the upper and lower manifold parts are fully separated. For example, ship would be completely released from the wind turbine.

It is pointed out that the term "line" is used in the present context as a general term for wires, ropes, and elongate strips that are used for connection.

In some embodiments, the brake line is unwound from a wound state, for example on a drum in or at the manifold. Alternatively, the brake line extends from the lower manifold part through the speed damping arrangement and subsequently into the protective sleeve of the umbilical. Advantageously, the umbilical is provided with a brake line sleeve into which brake line extends for being pulled out of the brake line sleeve and through the speed damping device during separation of the lower manifold part from the upper manifold part. Such brake line sleeve may advantageously be provided with an inner low friction surface for smooth sliding of the brake line in the brake line sleeve.

The system has a number of advantages. The system yields increased safety in cases of fluid transport through hoses, where there is risk of the hose being pulled away, for example by a ship in rough sea, especially if there is big height difference between the two connection points. Generally, the method where the manifold is lifted up to an installation or vessel reduces the number of hoist operations to a minimum of 2 operations (one lift and one lowering) as compared to multiple hoist operations when oil cans are hoisted for exchange of oil. Thereby, the method also reduces the heavy work, as oil is pumped from on tank directly into another tank (e.g. gearbox) in a closed system, the latter also reduces the risk for spilling or otherwise creating environmental risks. Although, special advantages are given by the system for offshore use, the system is also useful for onshore use, for example exchange of oil in an onshore wind turbine generator from a truck having an appropriate pumping and tank system.

In order to prevent breakage of the hose under stress, the hose is fastened to a lifting line that has a higher mechanical strength than the hose, especially higher bursting strength; often also a lower elasticity. The lifting line extends along the hose along its length, for example its entire length, for taking up elongate forces and thereby preventing or minimizing elongate stress on the hose. The term "entire length" is meant such that the sleeve is following the hose from the manifold to the reel when fully unwound, although a minor difference in length in the order of 1% due to mechanical fastening at the reel system is still meant to be within the term "entire length". For example, the lifting line is fastened to the lower manifold part such that the lifting force from the manifold acts on the lifting line directly, and the lifting force is transferred from the lifting line to the hose. As the hose, typically, is fixed to the lifting line at multiple locations, for example at distances of between 0.5 and 3 m, for example 1 m to 2 m, the hose is only exposed to small forces, which allows greater freedom with respect to dimensioning of the hose and material selection. Alternatively, the lifting line is attached to the hose along its entire length, for example by intertwining threads from the lifting line with threads that are part of the outer surface of the hose. A further alterniative is a lifting line curling as a spiral around the hose.

The practical advantage of a lifting line is that larger hoses can be attached and lifted up by the hoist system, because the larger hose is supported many locations along its length, why it is not stressed and does not break due to its own weight and the weight of the oil in the hose. This implies a weight reduction of the umbilical as compared to the pumping capacity through the hose. In other terms, a relatively high pumping speed can be obtained with a relatively light weight hose. The advantage is that pumping can be done quicker, which typically is of high interest in risky situations at sea, and it can be done with less energy consumption.

One possible means for fastening the hose to the lifting line is by straps, for example straps of the type that are spliced into the lifting line and wrapped tightly around the hose. However, other fasteners can be used, where it is preferred that the hose cannot slide relatively to the fasteners and relatively to the lifting line.

In order for the lifting line not to break during tension, but rather have the lower manifold part to be released, the lifting line, in a further embodiment, has a first break strength in terms of force larger than the first predetermined limit, for example at least 1.5 times larger or 2 times larger or 2.5 times larger.

Once the lower manifold part is released from the upper manifold part due to tension from the lifting line, for example because a ship is pulling away, the lower manifold part will fall with a reduced speed because of the brake line. Optionally, in order to assure that the brake line keeps the control until the lower manifold part has landed, the brake line is longer than the lifting line. Alternatively, it suffices, if the brake line has a length as long as the height of the installation to which the manifold is fluid flow connected, such as the nacelle of a wind turbine. By having such length, the brake line assures that the umbilical is falling slowly until it reaches the sea surface. In this case, the brake line needs not be longer than the lifting line but would, typically, be shorter than the lifting line

In case of a short pull on the lifting line, for example caused by a sudden unexpected wave, the lower and upper manifold parts may be separated due to this short pull. If the pull does not continue, it would be desirable that the lower manifold part does not fall down to the ground or water or down onto the vessel. For this reason, in a further embodiment, a further safety mechanism is included. This additional safety mechanism comprises a safety line connecting the upper manifold part to the lower manifold part in loose configuration, for example with a surplus length of between 0.1 meter and 1 meter, or example between 0.2 and 0.5 meter. The safety line prevents separation of the upper manifold part and the lower manifold part by more than the surplus length. Thus, if the manifold parts are pulled apart by a short pull, the safety line would keep the lower manifold part and the upper manifold part in near vicinity for quick reassembly, for example by exchange of break away modules, such as shear bolts, in a break away coupling.

As an even further safety mechanism, the safety line has a second break strength in terms of force which is higher than the first predetermined limit in order not to break before the lower manifold part is released from the upper manifold part, but lower than the first break strength of the lifting line. This implies that a pull of a strength that is higher than the first predetermined limit but lower than the break strength of the safety line would result in the safety line holding the upper and lower manifold parts in near vicinity.

Advantageously, in order to prevent breaking of the lifting line with a reasonable margin, the first break strength of the lifting line in terms of force is at least a factor of 1.5 times, rather 2 times or 2.5 times the value of first predetermined limit. In case that also a safety line is used between the upper and lower manifold parts, the second break strength of this safety line should fill the gap between the first controlled, predetermined limit and the first break strength of the lifting line. For example, if the first break strength of the lifting line in terms of force is at least a factor of 2.5 times the first predetermined limit, the second break strength of the safety line should be a factor of between 1.1 and 2.5 the first predetermined limit, for example between 1.1 and 2.0 times in order to have a safety margin between the second break strength of the safety line and the (lower) first controlled, predetermined limit as well as a safety margin between the second break strength of the safety line and the (higher) first break strength of the lifting line.

For example, the manifold comprises a container inside which the coupling and the speed damping arrangement are provided and to which the umbilical with the hose is fastened for transport of fluid from the hose and through the container. This yields a good protection of the speed damping arrangement. Optionally, the container comprises a cylindrical wall with an upper manifold plate and a lower manifold plate as end plates to the cylindrical wall, which in combination form a cylindrical container; wherein the coupling and the speed damping arrangement are provided inside the cylindrical container.

In some embodiments, the container comprises on an outer wall of the container an impact damper, for example a resilient impact damper, for damping possibly shock impact against the container wall. The impact damper is configured to take up impact energy by deformation for damping shock impact against the container. A fender is an example of such impact damper. For example, the impact damper is provided on a surface of the outer wall of the container, optionally by attachment to the surface of the outer wall. When the container is lifted onto an offshore installation, the container may become subject to collision with parts of the offshore installation with the risk of damage to the container and/or the offshore installation by the impact. In order to minimize such risk, the impact damper is configured to take up the impact and dampen the impact to an extent that the container wall is prevented from damage, such as deformation or breakage. Also the part of the offshore installation colliding with the container is, thereby, protected. For example in the case of the outer wall being cylindrical, more than half of the cylindrical wall is covers with the impact damping material.

Advantageously, the coupling comprises an upper coupling part fastened to the upper manifold part and a lower coupling part fastened to the lower manifold part. The upper coupling part and the lower coupling part are releasably interconnected such that decoupling of the lower coupling part from the upper coupling part causes decoupling of the lower manifold part from the upper manifold part. As a practical example, the coupling is configured for breaking at a first controlled, predetermined limit of between 3 kN and 10 kN.

In further embodiments, the upper coupling part is fluid-flow connected to a connection tube for connection to a tank for fluid exchange, for example a fitting from an oil tank. The connection tube is fastened to the upper manifold part and would therefore not be released from the upper manifold part when the lower manifold part is released from the upper manifold part. The lower coupling part is fluid-flow connected to the hose, such that it is released together with the hose and the lower manifold part in case of controlled release. The upper coupling part and the lower coupling part when interconnected comprise a fluid-flow connection between the hose and the connection tube. In other words, the fluid through the hose is also flowing through the connection tube in order to reach the installation to which the connection tube is connected.

Useful embodiments are found in a system wherein the umbilical comprises a protective sleeve around the hose, or around the hose and the lifting line if a lifting line is also provided. Such sleeve advantageously extends along the entire length of the hose and the potential lifting line. The sleeve around the hose(s) and potential lifting line(s), on the one hand, protects the hose(s) from ruptures by sharp edges, and, on the other hand, protects workers from fluid jets if a hose punctures. Also, the sleeve may prevent spillage into the environment and lead the spill from the puncture down to the vessel and into a drip tray. Aerosols due to oil or other liquid due to puncturing are also kept inside the protective sleeve to the benefit of the environment. If several hoses are used, a single sleeve may enclose such several hoses, or a sleeve may be provided for each single hose.

For example, the umbilical has a length of at least 50 meters, at least 100, or at least 120 meters. The ship or vessel or other watercraft comprises a pump system dimensioned for pumping liquid upwards through the hose to such height.

It should be pointed out that the transport of oil or other liquid through the system can be performed by a closed loop for the liquid. In such case, the liquid flowing down in one hose by gravity can be used to assist other liquid to be pressed up in another hose. In this case, less pressure is necessary for pumping than if the entire fluid has to be pumped up. Often however, the pressure loss due to viscosity during pumping is much larger than the pressure drop due to a height of 100 meter, such that the pressure drop due to the height is not decisive.

When the coupling is placed near to the highest point of the fluid transfer, for example by service of a wind turbine generator, this yields the lowest pressure difference between pumping of the fluid and not pumping. Accordingly, the separation force for the coupling is less dependent on height. In comparison, the placement of the coupling at the lowest point (near to sea level, if offshore operation) is problematic because the waves and tides makes it difficult to precisely place the coupling, and it would risk to collide with the umbilical.

As it occurs from the above, the embodiments are useful for a method for exchanging liquid over a substantial height, for example more than 50 meter or more than 60 meter or even more than 100 meter, for example between vessels at sea or between a vessel, such as a ship, and an offshore or an onshore installation, or between a service truck and an onshore installation. Apart from wind turbine generators, offshore installations include offshore oil and gas platforms or rigs.

As already indicated above, the system is useful in connection with vessels, such as ships, comprising a reel system to which the umbilical is connected. In order to take into account movements on waves that should not lead to release of the manifold parts, the reel system is advantageously equipped with an automatic wave-compensation mechanism in order to compensate for the movement caused by the waves, leading to corresponding movements of the umbilical. The hose and lifting line can thus, be held under a desired tension, which minimizes detrimental stresses in the hose.

For example, in further embodiments, the system comprises a reel system onto which the umbilical is wound and from which it is unwound. Advantageously, the system comprises a tension adjustment mechanism, functionally connected to the reel system, for automatically winding up and unwinding the umbilical by the reel system in response to the tension on the umbilical. Thereby, it is safeguarded that there is no unnecessary load on the manifold from the umbilical that potentially would decouple the lower manifold part from the upper manifold part unintentionally. For example, the tension adjustment mechanism comprises a tension measuring unit which causes the reel system to wind up more of the umbilical, and thereby more of the hose, if the tension level becomes lower than a lower predetermined tension level and to unwind the umbilical if the tension becomes higher than an upper predetermined tension level. The tension adjustment mechanism is useful in order to compensate for the motion induces by waves on ships; for example the tension adjustment device would be useful if there are unsuspected waves suddenly hitting a ship during change of gear oil in a wind turbine generator. Also, the tension adjustment mechanism may be used in order to compensate for wind forces on the umbilical. A further option is that the tension adjustment mechanism has a function to dampen resonance oscillations of the umbilical.

Use of the reel system with a tension adjustment mechanism acting on the umbilical, as described above, can be regarded as an invention independent from the other described embodiments, but which can advantageously be combined with the other embodiments. Such independent invention can be defined as use of a reel system onto which the umbilical is wound and from which it is unwound, where a tension adjustment mechanism is functionally connected to the reel system for automatically winding up and unwinding the umbilical by the reel system in response to the tension on the umbilical. For example, the tension adjustment mechanism comprises a tension measuring unit which causes the reel system to wind up more of the umbilical, and thereby more of the hose, if the tension level becomes lower than a lower predetermined tension level and to unwind the umbilical if the tension becomes higher than an upper predetermined tension level. The use comprises compensating for the motion induces by waves on ships, for example during change of gear oil in wind turbine generators; compensating for wind induced forces on the umbilical; and/or damping oscillations of the umbilical, especially resonance oscillations.

The usefulness of the lifting line is explained in the following with some illustrating calculations. Currently, gear oil exchange in offshore wind turbine generators is done from ships where the umbilical is a double hose that is self supporting and without a lifting line. The hoses have to withstand the tension due to their own weight as well as the additional tension due to the weight of the oil in the hoses, apart from pressure due to pumping.

It is important that the hose does not break due to stress. For this reason, in prior art systems, typically, only hoses are used with an inner diameter of ¾ inch (¾" hose) or smaller. Such relatively narrow tubes imply a disadvantageously low flow rate. As an example, the flow rate is calculated below for typical gear oil for wind turbine generators, such as Mobil's Mobilgear SHC XMP 320 or Petro Canada's HARNEX 320 Wind Turbine Gear Oil.

| | |
|---|---|
| • 3/4" Hydraulic hose is rolled out in a 120 meters vertical line. | |
| • Temperature | 20°C |
| • Cinematic viscosity of | 1,000* 10⁻⁶ m²/s |
| • Density of the hydraulic oil is | 860 kg/m |
| • Flow[Q] = | 15 l/min |
| • Inside pipe diameter[D] = | 0.019 m |
| • Weight acceleration[g] = | 9.817 m/s² |

| | |
|---|---|
| The pressure loss just for pumping is calculate to | 81 bar |
| The pressure loss because of the height difference is | 10 bar |

When having regard to the fact that about 1000 litre have to be exchanged in wind turbine generator gears, this would imply more than one hour pumping, which is a disadvantageous long time when having regard to the fact of typically unstable weather conditions. Increasing the flow speed requires increased pumping power and increased necessary stability of the hose. Increasing the flow rate to 40 litre per minute would increase the pressure to more than 220 bars, which is not acceptable. Thus, there is a problem in prior art systems with respect to the interplay between stability and pumping speed.

This dilemma from the prior art can be solved according to the following. By using a lifting line, the tension on the hose is drastically reduced, and the supporting function of the connection between the hose and the lifting line makes it possible to use hoses with 1 or 2 inch inner diameter, which allows an increase in the flow rate by almost a factor of three despite lowering the pressure as illustrated by the calculation below.

| | |
|---|---|
| • 1" Hydraulic hose is rolled out in a 120 meters vertical line. | |
| • Temperature | 20°C |
| • Cinematic viscosity of | 1,000* 10⁻⁶ m²/s |
| • Density of the hydraulic oil is | 860 kg/m |
| • Flow[Q] = | 40 l/min |
| • Inside pipe diameter[D] = | 0.0254 m |
| • Weight acceleration[g] = | 9.817 m/s² |

| | |
|---|---|
| The pressure loss just for pumping is calculate to | 68 bar |
| The pressure loss because of the height difference is | 10 bar |

The advantage of using a lifting line attached to a hose justifies the lifting line in combination with a hose to be regarded as an invention independent from the other described embodiments, but which can advantageously be combined with the other embodiments. It can be defined as an umbilical comprising a hose and a lifting line with a higher strength than the hose, the lifting line extending along the hose and being fastened to the hose at multiple locations along its length, for example at intervals of between 0.5 and 3 meters, for taking up elongate forces and thereby preventing or minimizing elongate stress on the hose. The term umbilical is to be understood as initially defined above.

A useful candidate for a lifting line has been found among ropes with the registered trademark Dynema.

In order to prevent lifting lines from breaking, the coupling should break first. Useful candidates as couplings have been found in SBCouplings from Mann Tek.

In the following, as a concrete example, a sequence of breaking is given with reference to specific parts. A coupling 2 of the type SB Coupling DN25 will break at 600 kg if provided with breaking bolts 16 with a strength of 5.8kN and at 816 kg if breaking bolts 16 are used with strength of 8.0 kN. At a pressure of 4 bar, the SB Coupling will break at a load of 340 kg. An option is to replace the bolts by bolts with strength of 8.0 kN, which would increase the limit of breaking by approximately 200 kg. A Parker 492 - 16 1" hydraulic hose will break at 700 kg (50% extension before breaking). A safety line 17 of 4 mm steel will break at 1,180 kg. A Dynema rope as a lifting line will break at 4,110 kg (1% extension at a load of 1,500 kg). These numbers illustrate the step wise breaking of the components, which in combination yields increased safety.

The term "advantageously" has been used for features that are optional but include an advantage.

### Description of the drawings

This invention will be described in relation to the drawings, where:
FIG. 1 is a simple sketch illustrating a small ship with a reel system from which an umbilical is connected to a large ship;
FIG. 2 is a simple sketch illustrating a ship (sevice-vessel) with a reel system from which an umbilical is connected to a nacelle of wind turbine;
FIG. 3 is a drawing of a resque manifold at the end of an umbilical;
FIG. 4 is a drawing of a reel system in an operational situation where two umbilicals are ready to be hoisted up, for example to a wind turbine;
FIG. 5 is a drawing of an alternative system with a cylindrical container as part of the manifold;
FIG. 6 is a sketch of some of the elements of the cylindrical container.

### Detailed Description of the Invention

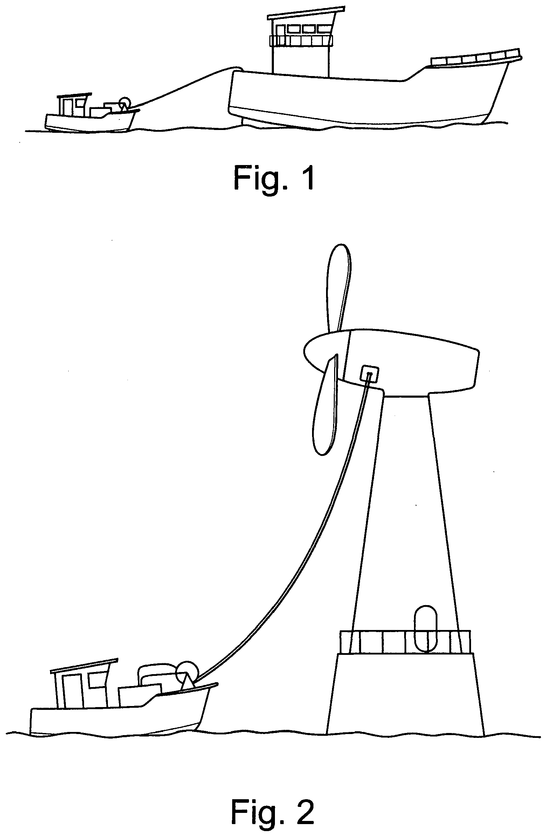

FIG. 1 is a simple sketch illustrating a small ship with a reel system from which an umbilical is connected to a large ship. FIG. 2 is a simple sketch illustrating a ship (service-vessel) with a reel system from which an umbilical is connected to a nacelle of wind turbine. These two examples illustrates to possible situations where umbilicals are used for transporting liquid between tanks. The invention, however, covers broader and could as well be used on land, for example between a tank lorry and a land based wind turbine generator.

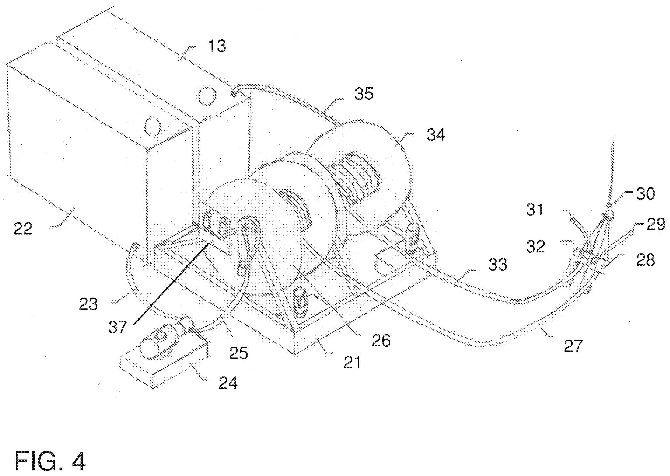

FIG. 4 illustrates the reel system 21 in greater detail, which is suitable for exchanging oil in a wind turbine, although it also can be used in other situations, such as general fluid transport between ships at sea or between ships and offshore platforms and rigs.

In the following, reference is made to umbilicals and hoses in umbilicals. In case that the umbilical is nothing more than a hose, the term has to be understood as the hose itself in line with the initial definition above.

The reel system 21 comprises a first tank 22 for fluid to be supplied via a first supply pipe 23 to a pump station and from there through a transport pipe 25 to the first hose reel 26 in order to feed the hose of the first umbilical 27. The first umbilical 27 ends in a first manifold 28 to which a first connection tube 29 is connected for further connection to a liquid tank, for example in the nacelle of a wind turbine. The transport pipe 25 can be split into 2 pipes, and there can be placed a filter unit in the split transport pipe 25. The reel system 21 comprises also a second tank 36 for fluid to be received via a second supply pipe 35 from a second umbilical 33 through to the second hose reel 34. The second umbilical 33 ends in a second manifold 32 to which a second connection tube 31 is connected for further connection to a liquid tank, for example in the nacelle of a wind turbine. The transport pipe 31 can be split into 2 pipes, and there can be placed a pump unit in the split transport pipe 31.

The reel system 21 also comprises a manoeuvre plat 37 for the two independent hose reels 26, 34 (hose winches) by which the reel system 21 is controlled. For example, the control options are for each hose reels 26, 34
- winding in and out
- ON / OFF for automatic tension adjustment;
- adjustment of the tension of the umbilicals 27, 33

Typically, the two hose reels 26, 34 are individual driven, controlled and adjusted. For example, one reel 26 is used for an umbilical 27 with a 1" ("=inch) hose and the other reel 34 for en umbilical 33 with a 1" hose and an additional ½" hose. The two 1" hoses of the umbilicals 27, 33 are for liquid transfer, for example oil, and the ½" hose (not shown) is a service hose, for example for compressed air.

For example, the two hoses in the umbilicals 27, 33 are used as follows. The hose of the first umbilical 27 has a forward flow direction from a service vessel to a service object, for example a wind turbine generator, and the hose in the other umbilical 33 is a return line. The hose of the first umbilical 27 with the forward direction is used for new and/or cleaned oil in the situation of oil exchange, whereas the hose in the second umbilical 33 is a return line used for polluted oil.

The reel system 21 can, in principal, be equipped with further hose reels, and with further number of hoses/umbilicals per reel depending on the desired configuration.

When used on a ship/vessel, the reel system 21 is advantageously equipped with a hydraulic tension adjustment mechanism for keeping constant tension or tension within a defined interval, on the umbilical. As explained above, the term umbilical includes the hose and, if used, also the lifting line and the sleeve. In this case, the tension is automatic controlled, so that the unwinding or winding up of the umbilical compensates for the vessel movements at sea by waves. The reel system 21 is functionally connected to a tension measuring unit which causes the reel system 21 to wind up more of the umbilical 27, 33, and thereby more of the hose, if the tension level becomes lower than a lower predetermined tension level and to unwind the umbilical 27, 33 when the tension becomes higher than an upper predetermined tension level. This prevents, on the one hand, the umbilical 27, 33 from becoming so loose, such that there is a risk of it hanging into the water or getting out of proper control; on the other hand, it also prevents the tension on the umbilical 27, 33 to become too high, which would induce too much pull on the manifold 28, 32, implying a risk for the manifold to decouple the upper and lower part of it.

Optionally, the tension force is manually adjusted at the reel system, and the automated tension adjustment mechanism can be switched off for onshore operations.

For example, the equipment as illustrated in FIG. 4 is used in the following way in connection with a wind turbine. The two umbilicals 27, 33 are hoist up together with the manifolds 28, 32 by the hoist hook 30 and into a nacelle of a wind turbine. The two connection hoses 29, 31 of the two umbilicals 27,33 are connected to the gearbox in the wind turbine. The old gearbox oil is emptied out of the gearbox through the hose of the second umbilical 33 and new gearbox oil is filled into the gearbox by the hose of the first umbilical 27. Finally, the two hoses of the two umbilicals 27, 33 are disconnected again and hoist down.

It should be noted that the two hoses for forward flow and return flow could, alternatively be placed in a single umbilical on a single manifold.

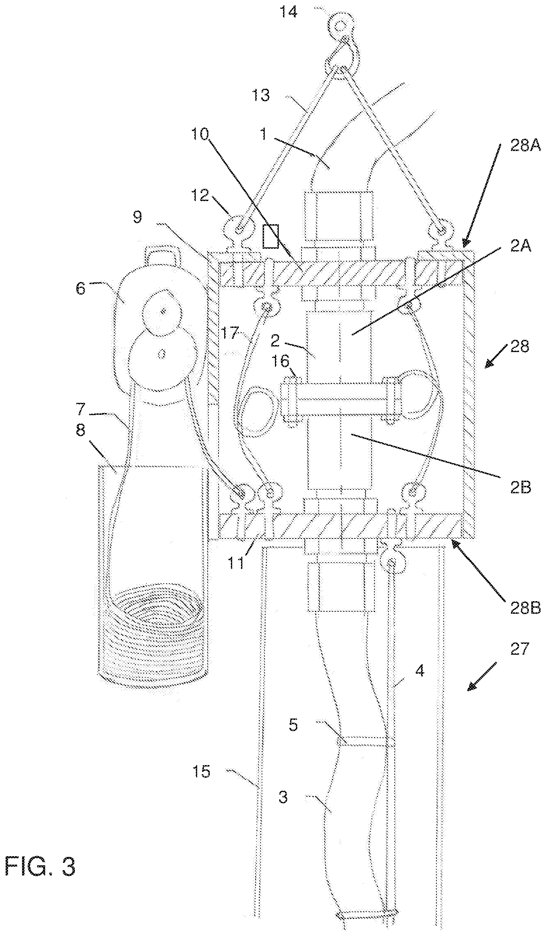

FIG. 3 is a drawing of a manifold 28 and an umbilical 27, for example of the type that is sketched in FIG. 4. For sake of illustration only one hose 3 is shown, although a similar system applies for a number of hoses. The hose 3 is attached and supported by a lifting line 4, typically a wire or rope, which obtains the forces in the longitudinal direction in order to protect the hose 3 from damage due to forces when lifted or pulled in general. The attachment of the hose 3 to the lifting line 4 is illustrated as straps 5, although also other means can be used; the straps 5 illustrate the general principle. The straps 5 are of a type that makes no harm to the lifting line 4 and the hose 3. In some embodiments, the straps 5 are spliced into the lifting line 4 so that the straps 5 are kept in place along the lifting line 4 without the risk for the hose 3 to slide out of the straps 6 as fasteners.

The lifting line 4 has an elasticity that is smaller than the elasticity of the hose 3 in order to prevent overloading of the hose 3 during stretching. In order to further protect the hose 3 from stretching, the hose 3 is attached to the lifting line 4 in a loose configuration; for example, the length of the hose 3 is selected to be 2% longer than the length of the lifting line 4.

For example, the lifting line 4 is made of a high strength material with small elasticity and high strength. For example, the lifting line 4 has strength of at least 10 cN/dtex , for example 28-38 cN/dtex, in relation to breaking force.

Although the hoses 3 have been explained as hydraulic hoses, they can also be configured and used for transmission of other fluids, such as gases or water.

As illustrated in FIG. 3, the hose 3 and the lifting line 4 are surrounded by a protective sleeve 15. This protective sleeve 15 protects workers from fluid jets in case that the hose 3 punctures. Due to the protective sleeve 15, the jet stream is changed into a defuse stream with less energy. The protective sleeve 15 also protects against flow of aerosol or other fluid streams directly into the atmosphere by keeping the aerosols or stream inside the protective sleeve 15 if a hose 3 leaks. In case of a leak, the protective sleeve 15 guides the leaked fluid, for example oil, to a drip tray under the reel system 21 which implies a higher safety environmentally and for personnel.

The protective sleeve 15 has some other functions, which include protection of the lifting line 4 and hose or hoses 3 inside the protective sleeve 15 against sharp edges and cause of ruptures from outside. It protects the hose(s) 3 from sunlight, which is important as sunlight with time can cause degradation of the material of the hose 3. In addition, it protects the hose 3 from direct exposure of the salty atmosphere in the air at sea.

For example, the main material of the protective sleeve is a water tight fabric or tarpaulin. A non limiting example is polyamide with polyurethane coating.

Advantageously, the protective sleeve 15 is wrapped around the lifting line 4 and closed with a Velcro closure in the longitude direction. Such Velcro closing of the protective sleeve 15 has the advantage of making it easy to inspect the lifting line 4 and hose(s) 3. Alternatively, the protective sleeve 15 can be made as a closed sleeve.

The manifold 28, as illustrated in greater detail in FIG. 3 is a safety measure built into the system. A hoist hook 14 with a lifting sling 13 is used to hoist the system up in lifting eyes 12, for example into the nacelle of a wind turbine or onto a larger vessel at sea. Fluid is transported through the hose 3 and the connection tube 1 which are length wise connected with an intermediate automatically releasable coupling 2. The coupling 2 is configured to separate into two parts 2A, 2B in case of pulling tension above a predetermined value. At the same time, the coupling 2 shuts off the flow in order to prevent spill. The coupling 2 is part of the manifold 28, which contains further safety devices as explained in more detail in the following.

The manifold has an upper manifold part 28A and a lower manifold part 28B that separate when the tension between them exceeds a predetermined force, given as a first controlled, predetermined limit. The upper manifold part 28A comprises the upper coupling part 2A of the coupling 2 and an upper plate 10. The upper manifold part 28A has attached to it the connection tube 1 and a speed damping arrangement 6 which for the lower manifold part 28B functions as a rescue device for a falling hose/umbilical; the speed damping arrangement 6 in combined with a brake line 7 and a receptacle 8 for the brake line 7 as well as a cover and attachment means 9. The manifold 28 has a lower manifold part 28B comprising the lower coupling part 2B of the coupling 2, lower lifting plates 11, further lifting eye(s) 12. It has attached to it the hose 3 with the lifting line 4, the protective sleeve 15and the break line 7. Furthermore, safety lines 17, typically wires, are connecting the upper and lower manifold parts (28A, 28B).

The upper and lower manifold parts 28A, 28B are connected under normal conditions, and fluid can flow through the coupling 2 between the connection tube 1 and the hose 3. However, in case of unwanted tension in the lifting line 4, the following happens. In case that the pulling forces exceeds the first predetermined limit, break away modules, such as shear bolts 16, in the coupling 2 break, and the upper coupling part 2A and lower coupling part 2B of the coupling 2 mutually disconnect, in which case also check valves (not shown) in the two coupling parts 2A, 2B close in order to prevent spill.

Safety lines 17, typically wires, are connected between the upper manifold part 28A and the lower manifold part 28B. The length of the safety lines 17 are longer than the distance between upper manifold part 28A and the lower manifold part 28B, for example between 0.5 and 1 meter longer or 0.3 meter longer. The surplus length of the safety wire 17 is shown as a coil. The purpose of the safety lines 17 are keeping the upper and lower manifold parts 28A, 28B connected even in case of breakage of the shear bolts 16 in the coupling 2.

If the pulling force is higher than the predetermined stability of the shear bolts 16, the shear bolts 16 will break. However, if the force is less than necessary to also break the safety lines 17, the upper manifold part 28A and lower manifold part 28B will stay connected by the safety lines 17. The safety lines 17 are designed to burst at a longitudinal force a little higher than the shear bolts 16 in the coupling 2. Only if the pulling forces also exceed the stability of the safety lines 17, these will break, and the upper and lower manifold parts 28A, 28B will be disconnected and the lower part of the manifold 28 will start to fall.

In order to prevent a free fall of the umbilical 27 and lower manifold part 28B, there is mounted a further safety device on the manifold 28. This safety device is used in connection with a falling umbilical 27 and is provided as a speed damping arrangement 6.

It prevents a free fall of the umbilical 27 and the lower manifold part 28B; instead it slows down the descent speed in order to give personnel prolonged time to react to the falling umbilical 27. The speed damping arrangement 6 is combined with a brake line 7, for example longer than the length of the hose 3 in order to ensure that hose 3 and the lower manifold part 28B reach the ground, for example land or the water surface, before the brake line 7 runs out of the speed damping arrangement 6. The brake line 7 passes around a drum, for example a grooved pulley, linked to a high-speed shaft. Centrifugal brakes in this shaft are forced apart as they spin, slowing the speed of the brake line 7 through and thereby slowing the descent automatically and giving a fixed and safe maximum speed independent of the applied load.

The brake line 7 for the speed damping arrangement 6 is stored in a receptacle 8 in which the brake line 7 is coiled, typically with length of more than 100 meters, for example 120 meters. The weight of the brake line 7 is sufficient to secure that it stays untangled in the receptacle. The brake line 7 has an end in the receptacle 8 that is free so it can be pulled out through the speed damping arrangement 6, for example if a vessel has to pull away from an offshore wind turbine generator in emergency cases. The falling brake line 7 will in that case be of no danger for the workers on the vessel because brake line 7 will fall into the sea. Thus, the system decouples the ship from the installation, such as the wind turbine, entirely in cases of storm or other uncontrolled situations.

The speed damping arrangement 6 is made according to EN341:2008 and can also be used for evacuation and rescue of personnel working at height.

As it occurs from the above, the manifold 28 has several safety mechanisms working sequentially and in synergy in order to maximize safety. Only if the above mentioned safety features fail, and the overload is such that even the lifting line 4 will break, there is a risk for also the hose 3 to break.

It is an advantage that the coupling 2 is placed near to the highest point of the fluid transfer, for example for service of a wind turbine generator, because this results in a lower pressure difference between pumping of the fluid and not pumping. This makes the release force less dependent of height. The placement of the coupling 2 at the lowest point, for example near to sea level if in offshore operation, would be problematic, because the wave compensation and tides would make it difficult to precisely place the coupling 2, especially when in the vicinity where the hose 3 leaves the reel system 21.

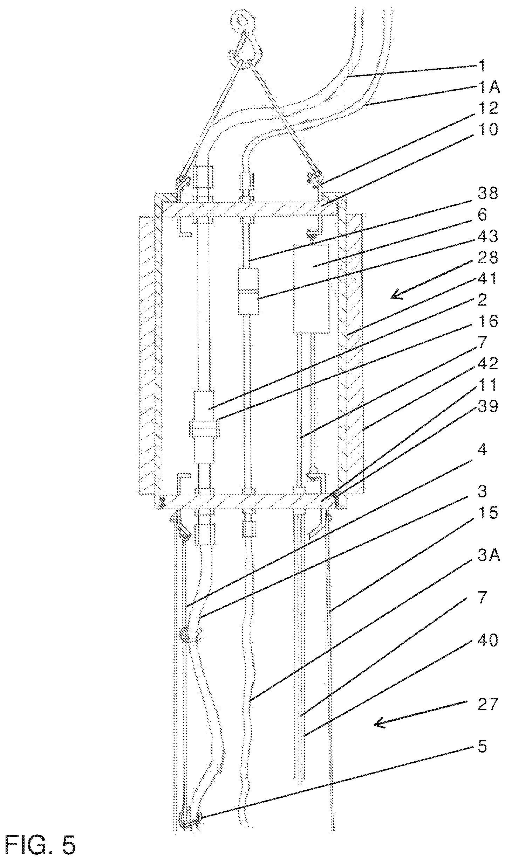

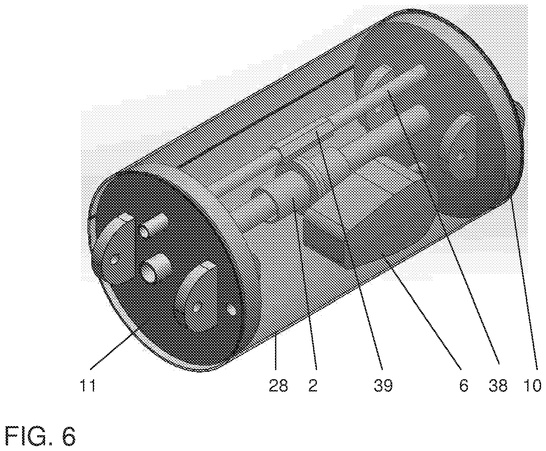

In FIG. 5, a further embodiment is illustrated, selected elements of which are shown in FIG. 6. In this embodiment, the umbilical 27 comprises a cylindrical manifold 28 with a lower plate 11 that is releasably fastened to the surrounding cylindrical wall 41, for example by O-rings 39. The cylindrical wall 41 is shown as transparent in FIG. 6. Breakage of the releasable coupling 2 releases the lower plate 11 from the upper plate 10 and from the cylindrical wall 41 of the manifold 28. The provision of the lower plate 11 inside the outer wall of the manifold 28, for example cylindrical manifold, results in the release direction of the lower plate 11 being well defined in the direction along the centre axis of the manifold, for example cylindrical axis of the manifold 28, despite possible forces in a direction inclined to this axis. This assures a well-defmed release force that is necessary to break the bolts in the releasable coupling 2.

The umbilical comprises a further hose 3A, which may be used for a second fluid. For example, the two hoses 3, 3A are used for gearing oil and for hydraulic oil, respectively. Optionally, the two hoses 3, 3A have different diameters, for example varying between a quarter inch and two inches inner diameter. Correspondingly, there are also two connections tubes 1 and 1A for fluid-flow connection of the umbilical and manifold to the ship or installation, for example wind turbine, other ship, or harbour installation. The further hose 3A and the further connection tube 1A are connected by solid tube 8, or alternatively a flexible tube, inside the cylindrical manifold 28, the solid tube comprising a further releasable coupling 43 with check valves inside for preventing spill, similar to the releasable coupling 2.

In this embodiment, the speed damping arrangement 6 is provided inside the cylindrical manifold 28. Thereby, it is well protected. The brake line, in turn, is stored in a brake line sleeve 40, which extends inside the protective sleeve 15 of the umbilical. For example, this brake line sleeve 40 is advantageously provided with a low friction inner surface such that the brake line 7 is not hampered when moving through the speed damping arrangement 8. For example, the length of the brake line 7 is shorter than the entire umbilical. A possible useful length in connection with offshore wind turbines is equal to the height of a nacelle from sea level.

Around the wall 41 of the manifold 28, an impact damping material 42 is provided, for example a resilient impact damping material in order to dampen impact and prevent cause of damage by mechanical shocks during impact. For example, the damping material 42 has a low degree of elasticity such that the manifold 82 is not bouncing back after impact. Such materials are known from fenders used for watercrafts. A nonlimiting example of a possible material for such impact damper is polymer foam, optionally viscoelastic foam, also known as cold foam, which has the ability to deform reluctantly upon impact by which the force from the impact is absorbed in a controlled way. After impact, the cold foam would regain its shape slowly as compared to the impact speed and recondition for further impacts.

### Part list:

1: Connection tube (to connect to object to be serviced)
1A: Further connection tube (to connect to object to be serviced)
2: Releasable coupling with upper coupling part 2A and lower coupling part 2B
3: Hose
3A: Further hose
4: Lifting (and/or puling) line
5: Straps to fix hose 3 to lifting line 4
6: Speed damping arrangement (Rescue device)
7: Brake line
8: Receptacle for brake line 7
9: Cover and attachment of the speed damping arrangement 6 with receptacle 8
10: Upper plate of manifold 28
11: Lower plate of manifold 28
12: Lifting eye
13: Lifting sling or wire
14: Lifting hook
15: Protective sleeve
16: Shear bolts in coupling 2
17: Safety line(s)
21: Reel system
22: First tank
23: First supply pipe from first tank 22 to pump station 24
24: Pump station for fluid
25: Transport pipe from pump station to first umbilical 27
26: First reel
27: First umbilical
28: First manifold with upper manifold part 28A and lower manifold part 28B
29: First connection tube
30: Hoist hook
31: Second connection tube
32: Second manifold
33: Second umbilical
34: Second reel
35: Second supply pipe from second tank 36
36: Second tank
37: Manoeuvre plat with manoeuvre handles and adjustment of tension force
38: Solid connecting tube
39: O-rings
40: Brake line sleeve
41: Wall of cylindrical manifold 28
42: Resilient impact damping material on cylindrical manifold 28
43: Further releasable coupling

## Claims

1. A method of changing oil of a gearbox in a nacelle of a wind turbine generator with a system for transport of fluid, the system comprising a manifold (28) and an umbilical, the umbilical having a first end attached to the manifold; the manifold having means (12, 13, 14) for being connected to a hoist for lifting the manifold (28) together with the first end of the umbilical prior to connection to a the gearbox for fluid exchange; the manifold (28) comprises an upper manifold part (28A) and a lower manifold part (28B) mutually connected by an automatic releasable coupling (2); the coupling (2) being configured for causing controlled and automated release of the lower manifold part (28B) from the upper manifold part (28A) if a force for separating the two manifold parts (28A, 28B) exceeds a first controlled, predetermined limit; wherein the system comprises an umbilical, the umbilical comprising a hose (3) for transport of oil; the umbilical having its first end fastened to the lower manifold part (2B) for being lifted with the manifold (28) when the lower manifold part (28B) is connected to the upper manifold part (28A) and for being released from the upper manifold part (28A) together with the lower manifold part (28B); wherein the upper and lower manifold parts (28A, 28B) are interconnected by a brake line (7), wherein the brake line (7) is configured for moving through a speed damping arrangement (6) for limiting the speed of the brake line (7) to a predetermined speed value during separation of the lower manifold part (28B) from the upper manifold part (28A) for thereby limiting the speed of such separation and preventing a free fall, wherein the method comprises lifting the manifold (28) with a hoist to the nacelle while the lower manifold part (28B) is connected to the upper manifold part (28A), connecting the hose (3) to the gearbox and changing oil of the gearbox through the hose.

2. A method according to claim 1, wherein the system comprises a reel system (21) onto which the umbilical is wound and from which it is unwound; wherein the system comprises a tension adjustment mechanism, functionally connected to the reel system (21), for automatically winding up and unwinding the umbilical by the reel system (21) in response to the tension on the umbilical; wherein the tension adjustment mechanism comprises a tension measuring unit and the method comprises causing the reel system (21) to wind up more of the umbilical, and thereby more of the hose (3), if the tension level becomes lower than a lower predetermined tension level and unwinding the umbilical (3) if the tension becomes higher than an upper predetermined tension level.

3. A method according to claim 2, wherein the reel system (21) is equipped with an automatic wave-compensation mechanism and the method comprises automatically compensating for movements of the reel system caused by waves, leading to corresponding movements of the umbilical.

4. A method according to claim 1 , wherein the manifold comprises a container inside which the coupling (2) and the speed damping arrangement (6) are provided and to which the umbilical with the hose is fastened for transport of fluid from the hose and through the container.

5. A method according to claim 4, wherein the container comprises a cylindrical wall (41) with an upper manifold plate (10) and a lower manifold plate (11) as end plates to the cylindrical wall (41), which in combination form a cylindrical container; wherein the coupling (2) and the speed damping arrangement (6) are provided inside the cylindrical container.

6. A method according to claim 4 or 5, wherein on an outer wall of the container there is provided resilient impact damper configured to take up impact energy by deformation for damping shock impact against the container.

7. A method according to any preceding claim, wherein the umbilical comprises a lifting line (4) fastened to the lower manifold part (28B); wherein the lifting line (4) has a higher strength than the hose (3) and extends along the hose (3) and is fastened to the hose (3) at multiple locations along its length for taking up elongate forces and thereby preventing or minimizing elongate stress on the hose (3); wherein the lifting line (4) has a first break strength in terms of force higher than the first predetermined limit.

8. A method according to claim 7, wherein the adjacent locations are separated by a distance of between 0.5 and 3 m.

9. A method according to claim 7 or 8, wherein the lifting line is fastened to the hose by straps.

10. A method according to any preceding claim, wherein the umbilical comprises a protective sleeve (15) around the hose (3), the sleeve (15) extending along the entire length of the hose (3); and in case of the umbilical also comprising a lifting line (4) according to claim 7, 8 or 9, the sleeve is also arranged around the lifting line.

11. A method according to claim 10, wherein the brake line (7) extends from the lower manifold part (28B) through the speed damping arrangement (6) and subsequently into the protective sleeve (15) of the umbilical.

12. A method according to claim 11, wherein the umbilical is provided with a brake line sleeve (41) into which brake line (7) extends for being pulled out of the brake line sleeve (41) and through the speed damping device (6) during separation of the lower manifold part (28B) from the upper manifold part (28A).

13. A method according to any preceding claims, wherein the coupling (2) comprises an upper coupling part (2A) fastened to the upper manifold part (28A) and a lower coupling part (2B) fastened to the lower manifold part (28B); the upper coupling part (2A) and the lower coupling part (2B) being releasably interconnected such that decoupling of the lower coupling part (2B) from the upper coupling part (2A) causes decoupling of the lower manifold part (28B) from the upper manifold part (28A); the upper coupling part (2A) being fluid-flow connected to a connection tube (1) for connection to a tank for fluid exchange; the connection tube (1) being fastened to the upper manifold part (28A); wherein the lower coupling part (2B) is fluid-flow connected to the hose (3) such that the upper coupling part (2A) and the lower coupling part (2B) when interconnected comprises a fluid-flow connection between the hose (3) and the connection tube (1).

14. A method according to any preceding claim, wherein the brake line (7) is configured for being unwound through the speed damping arrangement (6).

15. Use of a method according to any preceding claim for transporting oil between an offshore wind turbine generator and a ship or between an onshore wind turbine and a truck on ground for the purpose of changing oil of a gearbox in a nacelle of a wind turbine generator.

## Patentansprüche

1. Verfahren zum Ölwechsel bei einem Getriebe in einer Gondel einer Windenergieanlage mit einem System zum Transport von Fluid, wobei das System eine Anschlussstation (28) und eine Versorgungsleitung umfasst, wobei die Versorgungsleitung ein erstes Ende aufweist, das an der Anschlussstation befestigt ist; wobei die Anschlussstation Mittel (12, 13, 14) aufweist, um mit einer Hebevorrichtung verbunden zu werden, um die Anschlussstation (28) zusammen mit dem ersten Ende der Versorgungsleitung vor dem Verbinden mit dem Getriebe zum Fluidaustausch zu heben; wobei die Anschlussstation (28) einen oberen Teil (28A) der Anschlussstation und einen unteren Teil (28B) der Anschlussstation umfasst, die durch eine automatisch trennbare Kupplung (2) miteinander verbunden sind; wobei die Kupplung (2) so konfiguriert ist, dass sie ein kontrolliertes und automatisiertes Trennen des unteren Teils (28B) vom oberen Teil (28A) der Anschlussstation bewirkt, wenn eine Kraft zum Trennen der zwei Teile (28A, 28B) der Anschlussstation eine erste kontrollierte, vorbestimmte Grenze überschreitet; wobei das System eine Versorgungsleitung umfasst, wobei die Versorgungsleitung einen Schlauch (3) zum Transport von Öl umfasst; wobei das erste Ende der Versorgungsleitung an dem unteren Teil (2B) der Anschlussstation befestigt ist, um zusammen mit der Anschlussstation (28) gehoben zu werden, wenn der untere Teil (28B) der Anschlussstation mit dem oberen Teil (28A) der Anschlussstation verbunden ist, und um von dem oberen Teil (28A) der Anschlussstation zusammen mit dem unteren Teil (28B) der Anschlussstation getrennt zu werden; wobei der obere und der untere Teil (28A, 28B) der Anschlussstation durch ein Bremsseil (7) miteinander verbunden sind, wobei das Bremsseil (7) zur Bewegung durch eine Geschwindigkeitsdämpfungsanordnung (6) zum Begrenzen der Geschwindigkeit der Bremsleitung (7) auf einen vorbestimmten Geschwindigkeitswert während der Trennung des unteren Teils (28B) von dem oberen Teil (28A) der Anschlussstation ausgebildet ist, um dadurch die Geschwindigkeit einer solchen Trennung zu begrenzen und einen freien Fall zu verhindern, wobei das Verfahren das Anheben der Anschlussstation (28) zur Gondel mit einer Hebevorrichtung umfasst, während der untere Teil (28B) der Anschlussstation mit dem oberen Teil (28A) der Anschlussstation verbunden ist, und das Verbinden des Schlauchs (3) mit dem Getriebe und das Wechseln des Öls beim Getriebe durch den Schlauch umfasst.

2. Verfahren nach Anspruch 1, wobei das System ein Trommelsystem (21) umfasst, auf das die Versorgungsleitung aufgewickelt wird und von dem sie abgewickelt wird; wobei das System einen Spannungseinstellmechanismus umfasst, der funktionell mit dem Trommelsystem (21) verbunden ist, um die Versorgungsleitung als Reaktion auf die Spannung an der Versorgungsleitung automatisch mit dem Trommelsystem (21) aufzuwickeln und abzuwickeln; wobei der Spannungseinstellmechanismus eine Spannungsmesseinheit umfasst und das Verfahren ein Aufwickeln von mehr Versorgungsleitung und damit mehr Schlauch (3) durch das Spulensystems (21) umfasst, wenn das Spannungsniveau einen unteren vorbestimmten Spannungswert unterschreitet, und ein Abwickeln der Versorgungsleitung (3), wenn die Spannung einen oberen vorbestimmten Spannungswert überschreitet.

3. Verfahren nach Anspruch 2, wobei das Trommelsystem (21) mit einem automatischen Wellenkompensationsmechanismus ausgestattet ist und das Verfahren das automatische Kompensieren von durch Wellen verursachten Bewegungen des Rollensystems umfasst, was zu entsprechenden Bewegungen der Versorgungsleitung führt.

4. Verfahren nach Anspruch 1, wobei die Anschlussstation einen Behälter aufweist, in dem die Kupplung (2) und die Geschwindigkeitsdämpfungsanordnung (6) vorgesehen sind und an dem die Versorgungsleitung mit dem Schlauch befestigt ist zum Transport von Fluid vom Schlauch und durch den Behälter.

5. Verfahren nach Anspruch 4, bei dem der Behälter eine zylindrische Wand (41) mit einer oberen Platte (10) und einer unteren Platte (11) der Anschlussstation als Endplatten zur zylindrischen Wand (41) aufweist, die in Kombination einen zylindrischen Behälter bilden; wobei die Kupplung (2) und die Geschwindigkeitsdämpfungsanordnung (6) innerhalb des zylindrischen Behälters vorgesehen sind.

6. Verfahren nach Anspruch 4 oder 5, wobei an einer Außenwand des Behälters ein elastischer Aufpralldämpfer vorgesehen ist, der so konfiguriert ist, dass er Aufprallenergie durch Verformung aufnimmt, um einen Stoßaufprall gegen den Behälter zu dämpfen.

7. Verfahren nach einem der vorhergehenden Ansprüche, bei dem die Versorgungsleitung eine an dem unteren Teil der Anschlussstation (28B) befestigte Hubleine (4) aufweist; wobei die Hubleine (4) eine höhere Festigkeit als der Schlauch (3) hat und sich entlang des Schlauches (3) erstreckt und an mehreren Stellen entlang ihrer Länge an dem Schlauch (3) befestigt ist, um Streckkräfte aufzunehmen und dadurch Steckspannung am Schlauch (3) zu verhindern oder zu minimieren; wobei die Hubleine (4) eine erste Bruchfestigkeit in Bezug auf eine Kraft aufweist, die höher ist als die erste vorbestimmte Grenze.

8. Verfahren nach Anspruch 7, bei dem die benachbarten Stellen durch einen Abstand zwischen 0,5 und 3 m voneinander getrennt sind.

9. Verfahren nach Anspruch 7 oder 8, bei dem die Hubleine durch Riemen an dem Schlauch befestigt ist.

10. Verfahren nach einem der vorhergehenden Ansprüche, wobei die Versorgungsleitung eine Schutzhülse (15) um den Schlauch (3) herum umfasst, wobei sich die Hülse (15) entlang der gesamten Länge des Schlauchs (3) erstreckt; und im Falle dass die Versorgungsleitung auch eine Hebelinie (4) nach Anspruch 7, 8 oder 9 aufweist, ist die Hülse auch um die Hebelinie herum angeordnet.

11. Verfahren nach Anspruch 10, wobei sich die Bremsleitung (7) vom unteren Teil (28B) der Anschlussstation durch die Geschwindigkeitsdämpfungsanordnung (6) und anschließend in die Schutzhülse (15) der Versorgungsleitung erstreckt.

12. Verfahren nach Anspruch 11, wobei die Versorgungsleitung mit einer Bremsleitungshülse (41) versehen ist, in die sich die Bremsleitung (7) erstreckt, um aus der Bremsleitungshülse und durch die Geschwindigkeitsdämpfungsanordnung während des Trennens des unteren Teils (28B) vom oberen Teil (28A) der Anschlussstation (41) gezogen zu werden.

13. Verfahren nach einem der vorhergehenden Ansprüche, wobei die Kupplung (2) einen oberen Kopplungsteil (2A) umfasst, der an dem oberen Teil (28A) der Anschlussstation befestigt ist, und einen unteren Kupplungsteil (2B), der an dem unteren Teil (28B) der Anschlussstation befestigt ist; wobei der obere Kupplungsteil (2A) und der untere Kupplungsteil (2B) trennbar miteinander verbunden sind, so dass die Entkopplung des unteren Kupplungsteils (2B) vom oberen Kupplungsteil (2A) eine Entkopplung des unteren Teils (28B) der Anschlussstation vom oberen Teil (28A) der Anschlussstation bewirkt; wobei der obere Kupplungsteil (2A) mit einem Verbindungsschlauch (1) zur Verbindung mit einem Tank zum Flüssigkeitsaustausch fluidströmungsverbunden ist; wobei der Verbindungsschlauch (1) an dem oberen Teil (28A) der Anschlussstation befestigt ist; wobei der untere Kupplungsteil (2B) mit dem Schlauch (3) fluidströmungsverbunden ist, so dass der obere Kupplungsteil (2A) und der untere Kupplungsteil (2B), wenn sie miteinander verbunden sind, eine Fluidströmungsverbindung zwischen dem Schlauch (3) und dem Verbindungsschlauch (1) aufweisen.

14. Verfahren nach einem der vorhergehenden Ansprüche, wobei die Bremsleitung (7) so konfiguriert ist, dass sie durch die Geschwindigkeitsdämpfungsanordnung (6) abgewickelt wird.

15. Verwendung eines Verfahrens nach einem der vorhergehenden Ansprüche zum Transport von Öl zwischen einer Offshore-Windenergieanlage und einem Schiff oder zwischen einer Onshore-Windenergieanlage und einem Lastkraftwagen am Boden zum Ölwechsel bei einem Getriebe in einer Gondel einer Windenergieanlage.

## Revendications

1. Procédé de vidange d'huile d'une boîte de vitesses dans une nacelle d'un générateur d'éolienne avec un système de transport de fluide, le système comprenant un collecteur (28) et un ombilical, l'ombilical ayant une première extrémité fixée au collecteur ; le collecteur ayant des moyens (12, 13, 14) pour être raccordé à un palan afin de soulever le collecteur (28) conjointement avec la première extrémité de l'ombilical avant le raccordement à la boîte de vitesses pour un échange de fluide ; le collecteur (28) comprend une partie de collecteur supérieure (28A) et une partie de collecteur inférieure (28B) raccordées mutuellement par un couplage détachable automatique (2) ; le couplage (2) étant configuré pour provoquer la libération commandée et automatisée de la partie de collecteur inférieure (28B) de la partie de collecteur supérieure (28A) si une force pour séparer les deux parties de collecteur (28A, 28B) dépasse une première limite commandée prédéterminée ; dans lequel le système comprend un ombilical, l'ombilical comprenant un tuyau (3) pour le transport d'huile ; l'ombilical ayant sa première extrémité fixée à la partie de collecteur inférieure (2B) pour être soulevé avec le collecteur (28) lorsque la partie de collecteur inférieure (28B) est raccordée à la partie de collecteur supérieure (28A) et pour être libéré de la partie de collecteur supérieure (28A) conjointement avec la partie de collecteur inférieure (28B) ; dans lequel les parties de collecteur supérieure et inférieure (28A, 28B) sont raccordées entre elles par une conduite de frein (7), dans lequel la conduite de frein (7) est configurée pour se déplacer à travers un agencement d'amortissement de vitesse (6) afin de limiter la vitesse de la conduite de frein (7) à une valeur de vitesse prédéterminée pendant la séparation de la partie de collecteur inférieure (28B) de la partie de collecteur supérieure (28A) afin de limiter ainsi la vitesse d'une telle séparation et d'empêcher une chute libre, dans lequel le procédé comprend le soulèvement du collecteur (28) avec un palan à la nacelle pendant que la partie de collecteur inférieure (28B) est raccordée à la partie de collecteur supérieure (28A), raccordant le tuyau (3) à la boîte de vitesses et vidangeant l'huile de la boîte de vitesses à travers le tuyau.

2. Procédé selon la revendication 1, dans lequel le système comprend un système de dévidoir (21) sur lequel est enroulé l'ombilical et à partir duquel il est déroulé ; dans lequel le système comprend un mécanisme de réglage de la tension, raccordé fonctionnellement au système de dévidoir (21), pour enrouler et dérouler automatiquement l'ombilical grâce au système de dévidoir (21) en réponse à la tension exercée sur l'ombilical ; dans lequel le mécanisme de réglage de la tension comprend une unité de mesure de la tension et le procédé comprend le fait d'amener le système de dévidoir (21) à enrouler davantage l'ombilical, et ainsi davantage le tuyau (3), si le niveau de tension devient inférieur à un niveau de tension prédéterminé inférieur et le déroulage de l'ombilical (3) si la tension devient supérieure à un niveau de tension prédéterminé supérieur.

3. Procédé selon la revendication 2, dans lequel le système de dévidoir (21) est équipé d'un mécanisme de compensation automatique de la houle et le procédé comprend la compensation automatique de mouvements du système de dévidoir provoqués par des vagues, conduisant à des mouvements correspondants de l'ombilical.

4. Procédé selon la revendication 1, dans lequel le collecteur comprend un récipient à l'intérieur duquel sont prévus le couplage (2) et l'agencement d'amortissement de vitesse (6) et auquel l'ombilical est fixé avec le tuyau pour le transport de fluide depuis le tuyau et à travers le récipient.

5. Procédé selon la revendication 4, dans lequel le récipient comprend une paroi cylindrique (41) avec une plaque de collecteur supérieure (10) et une plaque de collecteur inférieure (11) en tant que plaques d'extrémité à la paroi cylindrique (41), qui forment en combinaison un récipient cylindrique ; dans lequel le couplage (2) et l'agencement d'amortissement de vitesse (6) sont prévus à l'intérieur du récipient cylindrique.

6. Procédé selon la revendication 4 ou 5, dans lequel un amortisseur de choc élastique configuré pour absorber l'énergie de choc par déformation afin d'amortir un impact de choc contre le récipient est prévu sur une paroi extérieure du récipient.

7. Procédé selon une quelconque revendication précédente, dans lequel l'ombilical comprend une ligne de levage (4) fixée à la partie de collecteur inférieure (28B) ; dans lequel la ligne de levage (4) a une résistance supérieure à celle du tuyau (3) et s'étend le long du tuyau (3) et est fixée au tuyau (3) à plusieurs endroits sur sa longueur pour absorber des forces allongées et ainsi empêcher ou minimiser une contrainte allongée sur le tuyau (3) ; dans lequel la ligne de levage (4) a une première résistance à la rupture en matière de force supérieure à la première limite prédéterminée.

8. Procédé selon la revendication 7, dans lequel les emplacements adjacents sont séparés par une distance comprise entre 0,5 et 3 m.

9. Procédé selon la revendication 7 ou 8, dans lequel la ligne de levage est fixée au tuyau par des sangles.

10. Procédé selon une quelconque revendication précédente, dans lequel l'ombilical comprend un manchon protecteur (15) autour du tuyau (3), le manchon (15) s'étendant sur toute la longueur du tuyau (3) ; et dans le cas où l'ombilical comprend également une ligne de levage (4) selon la revendication 7, 8 ou 9, le manchon est également agencé autour de la ligne de levage.

11. Procédé selon la revendication 10, dans lequel la conduite de frein (7) s'étend de la partie de collecteur inférieure (28B) à travers l'agencement d'amortissement de vitesse (6) et ensuite dans le manchon protecteur (15) de l'ombilical.

12. Procédé selon la revendication 11, dans lequel l'ombilical est pourvu d'un manchon de conduite de frein (41) dans lequel s'étend une conduite de frein (7) destinée à être extraite du manchon de conduite de frein (41) et à travers le dispositif d'amortissement de vitesse (6) pendant la séparation de la partie de collecteur inférieure (28B) de la partie de collecteur supérieure (28A).

13. Procédé selon une quelconque revendication précédente, dans lequel le couplage (2) comprend une partie de couplage supérieure (2A) fixée à la partie de collecteur supérieure (28A) et une partie de couplage inférieure (2B) fixée à la partie de collecteur inférieure (28B) ; la partie de couplage supérieure (2A) et la partie de couplage inférieure (2B) étant raccordées entre elles de manière amovible, de sorte que le découplage de la partie de couplage inférieure (2B) de la partie de couplage supérieure (2A) provoque le découplage de la partie de collecteur inférieure (28B) de la partie de collecteur supérieure (28A) ; la partie de couplage supérieure (2A) étant raccordée par un écoulement de fluide à un tube de raccordement (1) pour être raccordée à un réservoir pour un échange de fluide ; le tube de raccordement (1) étant fixé à la partie de collecteur supérieure (28A) ; dans lequel la partie de couplage inférieure (2B) est raccordée par un écoulement de fluide au tuyau (3) de sorte que la partie de couplage supérieure (2A) et la partie de couplage inférieure (2B), lorsqu'elles sont raccordées entre elles, comprennent un raccordement par un écoulement de fluide entre le tuyau (3) et le tube de raccordement (1).

14. Procédé selon une quelconque revendication précédente, dans lequel la conduite de frein (7) est configurée pour être déroulée à travers l'agencement d'amortissement de vitesse (6).

15. Utilisation d'un procédé selon une quelconque revendication précédente pour le transport d'huile entre un générateur d'éolienne en mer et un navire ou entre une éolienne à terre et un camion au sol dans le but de vidanger l'huile d'une boîte de vitesses dans une nacelle d'un générateur d'éolienne.
